Europäisches Patentamt

(19) European Patent Office

Office européen des brevets

(11) Numéro de publication: **0 270 451**
**B1**

(12) **FASCICULE DE BREVET EUROPEEN**

(51) Int. Cl.⁵: **F16K 27/02,** F16K 1/22

(45) Date de publication du fascicule du brevet:
13.06.90

(21) Numéro de dépôt: **87402673.5**

(22) Date de dépôt: **26.11.87**

(54) Robinet à papillon de type visitable.

(30) Priorité: **05.12.86 FR 8617031**

(43) Date de publication de la demande:
**08.06.88 Bulletin 88/23**

(45) Mention de la délivrance du brevet:
**13.06.90 Bulletin 90/24**

(84) Etats contractants désignés:
**DE ES GB IT**

(56) Documents cités:
**EP-A- 0 058 096**
**US-A- 2 750 955**
**US-A- 2 902 254**
**US-A- 2 936 778**
**US-A- 3 840 042**
**US-A- 4 079 747**

(73) Titulaire: **APPLICATIONS MECANIQUES ET ROBINETTERIE INDUSTRIELLE A.M.R.I. Société anonyme dite:, Les Mercuriales 40, rue Jean Jaurès, F-93176 Bagnolet Cédex(FR)**

(72) Inventeur: **Garrigues, Jean-Claude, 10, Chemin Chantecric, F-33140 Cadaujac(FR)**
Inventeur: **Laulhe, René, 5, Parc d'Ornon, F-33140 Villenave D'Ornon(FR)**

(74) Mandataire: **Marquer, Francis et al, CABINET MOUTARD 35, avenue Victor Hugo Résidence Champfleury, F-78180 Voisins-le-Bretonneux(FR)**

## Description

La présente invention concerne un robinet à papillon de type visitable, c'est-à-dire un robinet dont les éléments internes sont accessibles de l'extérieur.

D'une manière générale, on sait qu'un robinet à papillon de type classique se compose d'un corps tubulaire muni d'un alésage axial, et d'au moins un perçage radial dans lequel est monté rotatif, avec étanchéité, l'axe d'entraînement d'un papillon mobile en rotation à l'intérieur du corps. Ce papillon comprend alors des moyens d'étanchéité aptes à coopérer avec des moyens d'étanchéité portés par le corps pour assurer l'étanchéité amont/aval du robinet, en position fermée de celui-ci.

Il s'avère que dans certains types d'installation, l'utilisateur est amené à réaliser une liaison indémontable du robinet sur sa tuyauterie, cette liaison étant le plus souvent obtenue par soudure.

La maintenance du robinet exige alors que soit aménagée, dans le corps du robinet, une trappe de visite permettant l'accès aux organes internes du robinet et, éventuellement, leur extraction.

A l'heure actuelle, deux types de construction sont utilisés pour réaliser cette trappe.

Le premier type de construction consiste à prévoir la trappe de visite dans une partie du corps axialement décalée par rapport au perçage radial servant au montage rotatif du papillon.

Cette solution, qui permet d'obtenir une indépendance entre la trappe de visite et les pivoteries du papillon, présente néanmoins un certain nombre d'inconvénients dus au fait que :
- l'accessibilité aux organes internes du robinet est peu satisfaisante, étant donné que les pièces sur lesquelles les interventions s'effectuent habituellement ne sont pas dans l'axe de la trappe ;
- les opérations à l'intérieur du robinet s'effectuent en aveugle pour la même raison ;
- le corps du robinet est nécessairement long et, par conséquent, lourd et coûteux ; en outre, sa forme complexe pose des problèmes de réalisation.

Dans le deuxième type de construction, la trappe de visite est réalisée au niveau de la zone de passage de l'arbre d'entraînement en rotation du papillon. Elle est refermée par un chapeau incluant le col du robinet ainsi que les pivoteries servant au montage rotatif dudit arbre.

Cette solution permet de supprimer la plupart des inconvénients précédemment évoqués, en ce sens que :
- elle facilite l'accès aux organes internes du robinet, les pièces à démonter se trouvant dans l'axe de l'ouverture ;
- le corps du robinet ainsi réalisé est plus court et plus léger;
- le col étant séparé du corps, la réalisation de l'ensemble du robinet est rendue plus aisée.

Par contre, d'autres inconvénients apparaissent:
- le bon fonctionnement du robinet est soumis à l'alignement correct du chapeau sur le corps;
- ce bon fonctionnement ne peut pas être contrôlé lorsque le chapeau est retiré.

Par les brevets US-A 2 750 955 et US-A 2 936 778, on a également proposé des robinets comprenant:
- un corps tubulaire dont la partie centrale délimite une chambre d'obturation communiquant avec l'extérieur par un orifice latéral formant trappe de visite;
- un précorps annulaire muni de deux perçages sensiblement radiaux diamétralement opposés et pouvant passer par ledit orifice pour venir s'engager dans ladite chambre avec l'axe desdits perçages passant par ledit orifice;
- des moyens permettant une fixation démontable dudit précorps dans ledit corps;
- un papillon monté rotatif dans ledit précorps au moyen d'un arbre passant dans lesdits perçages;
- une garniture d'étanchéité montée sur le corps et/ou sur le précorps de manière à pouvoir coopérer avec ledit papillon pour assurer une étanchéité amont/aval du robinet; et
- un chapeau apte à venir se monter sur ledit corps de manière à obturer, de façon étanche et démontable, ledit orifice, ce chapeau comprenant un passage dans lequel est monté rotatif l'arbre d'entraînement en rotation du papillon.

L'invention a donc plus particulièrement pour but la réalisation d'un robinet visitable de ce genre, qui combine les avantages des deux types de construction précédemment évoqués.

Selon l'invention, ce robinet visitable est caractérisé en ce que le susdit corps comprend une face radiale interne annulaire, en ce que les susdits moyens de fixation comprennent une pluralité d'éléments de serrage axial d'un premier flanc radial dudit précorps contre ladite face radiale, et en ce que tous les éléments de serrage sont entièrement logés à l'intérieur du corps et sont accessibles par le susdit orifice latéral grâce à une conformation appropriée de ladite chambre d'obturation.

Il est clair que ce type de construction présente les avantages (faibles encombrement et poids-bonne accessibilité) de la deuxième solution précédemment évoquée et simplifie encore les formes et les opérations d'usinage du corps.

En outre, le papillon et sa garniture d'étanchéité peuvent être mis en place et leur bon fonctionnement peut être contrôlé aussi bien à l'extérieur qu'à l'intérieur du corps sans que le chapeau soit mis.

Selon ce type de construction, l'arbre servant au montage rotatif du papillon dans le précorps (arbre du papillon) et l'arbre d'entraînement en rotation du papillon qui traverse le chapeau peuvent être réalisés en une seule et même pièce.

Toutefois, un meilleur parti de l'invention est tiré lorsque ces deux arbres sont distincts et sont accouplés l'un à l'autre de façon démontable au moyen d'une liaison mécanique apte à transmettre le couple de man œuvre et à filtrer les efforts parasites dus à des désalignements ou à des déformations en service.

Dans ce cas, l'arbre du papillon est positionné par le précorps, tandis que l'arbre de man œuvre l'est par le chapeau. La qualité de l'étanchéité amont/aval du robinet devient alors indépendante du positionnement du chapeau, et l'étanchéité au passage de l'arbre d'entraînement dans le chapeau n'est plus influencée par les efforts exercés au niveau du papillon.

Il devient donc possible de choisir des matériaux différents pour l'arbre du papillon et l'arbre d'entraînement, spécifiquement adaptés aux sollicitations auxquelles ils doivent résister.

De surcroît, l'adjonction du précorps améliore le comportement aux chocs thermiques du robinet, puisque le papillon et ledit précorps se trouvent tous deux totalement baignés par le fluide et ont donc des vitesses de montée ou descente en température plus proches que dans les conceptions antérieures ; les contraintes et déformations thermiques pouvant influencer les performances du robinet se trouvent, de ce fait, réduites.

Le précorps et le corps du robinet peuvent être avantageusement réalisés dans des matériaux et par des modes d'obtention différents optimisant leurs caractéristiques. En particulier, il est possible d'utiliser des précorps présentant des formes très simples permettant leur obtention par usinage ou par forgeage.

Un autre avantage de l'invention consiste en ce que le corps du robinet n'assure pratiquement plus qu'une fonction d'enceinte et ne comprend pas de logements de paliers, du fait que ceux-ci et, en particulier, le palier inférieur, sont prévus dans le précorps. Il ne comprend donc plus de zone de rétention des impuretés et condensats qui pourraient entraver le bon fonctionnement du robinet, particulièrement dans le cas de robinets cryogéniques.

Il convient de noter à ce sujet que bien souvent, pour des raisons d'obtention, le logement du palier inférieur était traversant et devait être étanché. L'invention qui ne fait plus intervenir ce logement élimine donc un risque supplémentaire de fuite vers l'extrérieur.

En raison du fait que le sous-ensemble constitué par le précorps, le papillon et son axe porte intrinsèquement les qualités et les performances du robinet et que son montage est extrêmement simple, il est donc possible d'envisager de souder le corps sur la tuyauterie puis de procéder aux nettoyages et aux conditionnements des circuits avant de procéder au montage du robinet dont on pourra attendre le meilleur service, alors qu'antérieurement, les performances d'un robinet soudé complètement assemblé et réglé présentaient régulièrement des défaillances dues aux impuretés véhiculées lors des nettoyages.

Un mode d'exécution de l'invention sera décrit ci-après, à titre d'exemple non limitatif, avec référence aux dessins annexés dans lesquels :

La figure 1 est une coupe axiale d'un robinet à papillon visitable conforme à l'invention ;

La figure 2 est une vue schématique, en perspective, du robinet à papillon représenté sur la figure 1 ;

Les figures 3 et 4 sont deux coupes axiales partielles montrant deux modes d'exécution d'une garniture d'étanchéité montée entre le corps et le précorps du robinet de la figure 1 ;

La figure 5 est une coupe axiale partielle montrant une garniture d'étanchéité montée dans le papillon du robinet.

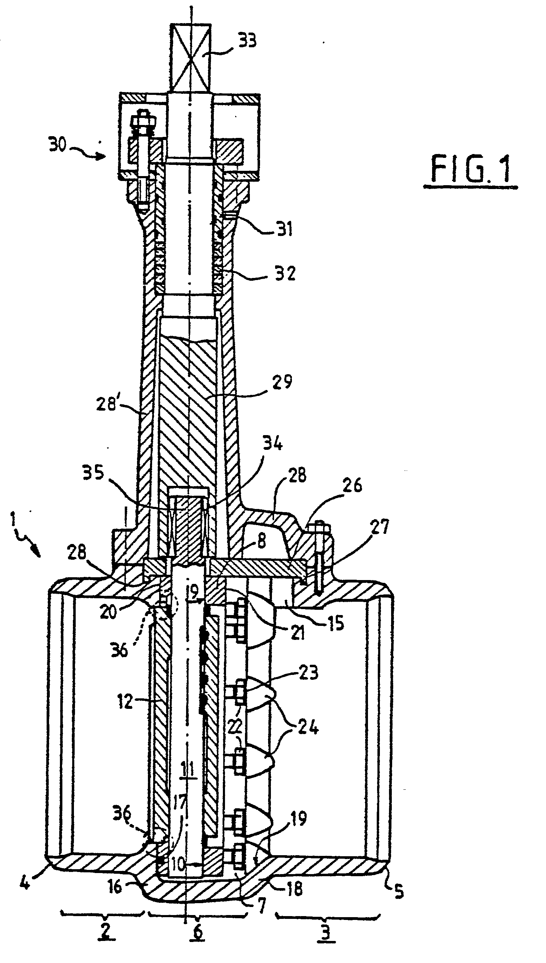

Tel que représenté sur la figure 1, le robinet se compose d'un corps tubulaire monobloc 1 présentant deux portions tubulaires coaxiales 2, 3 munies, à leurs extrémités opposées, de deux embouts de soudage respectifs 4, 5 et, entre ces deux portions, d'une portion centrale 6 délimitant une chambre d'obturation 7 destinée à recevoir un module d'obturation constitué par un précorps annulaire 8 muni de deux perçages sensiblement radiaux coaxiaux 9, 10 formant paliers dans lesquels vient tourillonner l'arbre 11 d'un papillon 12.

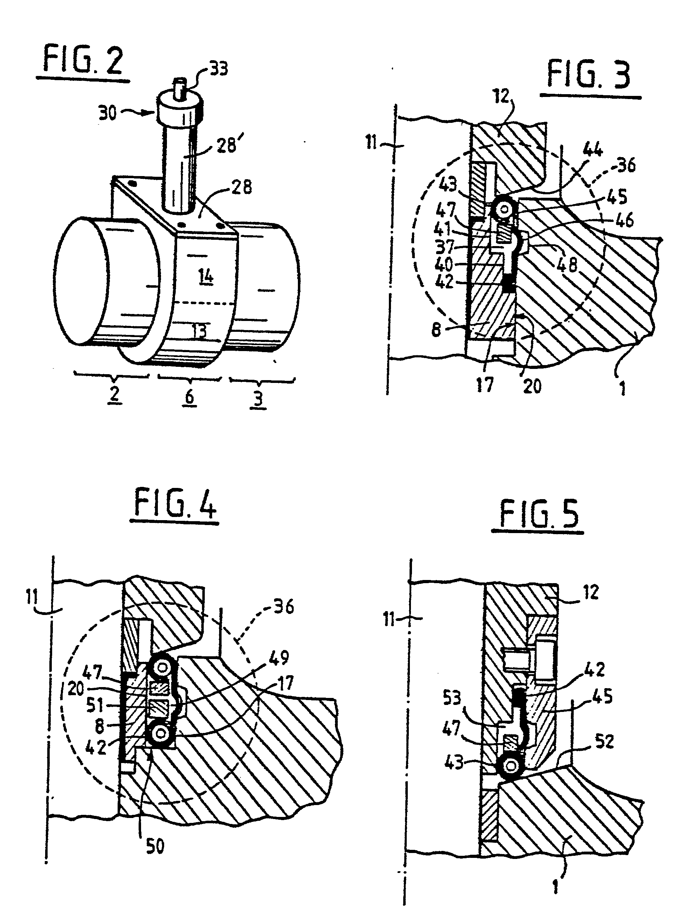

Comme cela est plus particulièrement visible sur la figure 2, la partie centrale 6 comprend une portion (ici la partie inférieure) de forme sensiblement hémicylindrique 13, de diamètre intérieur supérieur à celui des portions tubulaires 2, 3 et coaxiale à celles-ci, cette portion hémicylindrique 13 étant prolongée, au-delà de sa face axiale, par une portion (ici la portion supérieure) de forme sensiblement parallélépipédique 14 ouverte pratiquement sur toute l'étendue de son côté situé à l'opposé de ladite face axiale, cette ouverture 15 formant une trappe de visite.

La liaison entre la portion tubulaire 2 et la portion centrale 6 est assurée par une zone de liaison 16 présentant une face radiale interne annulaire 17 entourant l'alésage de ladite portion 2, tandis que la liaison entre la portion tubulaire 3 et la portion centrale 6 s'effectue par une zone de liaison 18 dont la paroi intérieure 19 forme un évasement en direction de la chambre d'obturation 7.

Dans l'exemple représenté, le précorps 8 présente une section de forme rectangulaire et un diamètre extérieur légèrement inférieur au diamètre intérieur de la portion hémicylindrique 13.

De ce fait, le précorps 8, muni de son papillon 12 et de ses pivoteries peut être introduit dans la chambre d'obturation 7 par la trappe de visite 15, et venir ensuite s'appliquer par son flanc radial 20 contre la face radiale interne 17 de la zone de liaison 16.

Pour permettre sa fixation et son serrage contre la face radiale 17, ce précorps 8 est muni d'une série de perçages auxiaux taraudés, uniformément répartis sur son flanc radial 21 opposé au flanc 20, et dans chacun desquels est vissée une vis 22 dont la tête vient comprimer, au cours d'un dévissage, des éléments élastiques 23 tels que des rondelles Belleville retenues par une protubérance 24 formée dans la zone de liaison 18 et venant en saillie sur la paroi intérieure 19.

Bien entendu, l'invention ne se limite pas à ce seul mode de fixation et de serrage. Il serait, par exemple, possible d'utiliser au lieu desdits boulons 22, des coins ou analogues engagés à force entre les protubérances 24 et le précorps 8.

Par ailleurs, des moyens de détrompage peuvent être prévus entre le précorps 8 et le corps 1 pour obtenir l'orientation désirée de l'arbre 11 du papillon 12.

Une fois le précorps 8 monté dans la chambre d'obturation 7, la trappe de visite 15 est ensuite refermée, de façon étanche :
- d'une part, au moyen d'une platine 26 muni de tenons 27 qui viennent s'engager dans une gorge 28 du corps 1 réalisée à la périphérie de la trappe 15, cette platine 26 servant à assurer la continuité mécanique du corps 1 et comprenant un perçage permettant le passage de l'arbre 11 servant au montage rotatif du papillon 12 ; et

- d'autre part, un chapeau 28 monté à la base d'un col tubulaire 28E dans lequel est monté rotatif, avec étanchéité, un arbre 29 d'entraînement en rotation du papillon 12.

Dans cet exemple, l'arbre 29 d'entraînement en rotation du papillon 12 est distinct de l'arbre 11 servant au montage rotatif du papillon dans le précorps 8.

Il est monté rotatif, avec étanchéité, dans la tête 30 du col 28E au moyen de paliers 31 et de moyens d'étanchéité 32 (presse étoupe) agencés de façon classique.

Pour permettre sa manoeuvre, il comprend par exemple, à l'une de ses extrémités ressortant de la tête 30 du col 28E, un carré de manoeuvre 33 sur lequel peut venir se monter un volant de manoeuvre ou un actionneur.

Pour permettre son couplage à l'arbre du papillon, il comprend, à son autre extrémité, un alésage cannelé 34 dans lequel vient s'engager, avec un léger jeu, un prolongement 35 de l'arbre 11 ressortant du précorps 8 et passant au travers du perçage de la platine 26.

Il est clair que les arbres 11 et 29 pourraient être réalisés en une seule et même pièce sans pour autant sortir du cadre de l'invention.

Le dispositif servant à assurer l'étanchéité amont/aval du robinet de la figure n'est pas clairement visible sur la figure 1 en raison de l'échelle utilisée et a été simplement localisé par les cercles portant la référence 36.

Les figures 3 et 4 montrent, à plus grande échelle, deux variantes de ce dispositif faisant intervenir un double joint torique métallique flexible monté dans une gorge annulaire radiale 37 formée entre le flanc radial 20 du précorps 8 et la face radiale interne 17 de la zone de liaison 16.

A cet effet, le flanc radial 20 du précorps 8 peut comprendre, comme représenté sur la figure 4, dans une zone circulaire adjacente à sa surface cylindrique interne, une feuillure à double étagement 40, 41.

Dans ce cas, le double joint torique comprend :

- une première structure de joint torique 42 destinée à assurer une étanchéité statique avec le corps 1 du robinet ;
- une deuxièmre structure de joint torique 43, de diamètre inférieur à la première et destinée à coopérer avec la tranche 44 du papillon 12 pour obtenir avec celle-ci une étanchéité dit dynamique ;
- une membrane 45 assurant une continuité de l'étanchéité entre les deux structures de joint 42, 43, cette membrane 45 comportant dans sa région médiane une pliure 46 destinée à assurer une souplesse radiale entre les deux structures de joint 42, 43 ; et
- un anneau de réaction 47 monté serré contre la deuxième structure de joint 43, dans l'espace compris entre les deux structures 42, 43.

Dans cet exemple, la première structure de joint 42 se trouve axialement comprimée entre la face radiale 17 du corps 1 et l'étagement 40 du flanc radial 20 du précorps 8. Par contre, la seconde structure de joint 43 peut se déplacer radialement dans le volume compris entre l'étagement 41 et la face radiale 17 du corps. Cette dernière comprend, par ailleurs, une gorge annulaire axiale 48 dans laquelle se loge la pliure 46 de la membrane 45.

Dans l'exemple représenté sur la figure 4, le flanc radial 20 du précorps 8 ne comprend pas d'étagement et forme avec la face interne 17 une gorge annulaire 49 de section sensiblement rectangulaire.

Dans ce cas, la première structure de joint torique 42 se trouve radialement comprimée entre le fond 50 de la gorge 49 et un second anneau de réaction 51 qui s'étend dans le volume libre compris entre le premier anneau de réaction 47 et la première structure de joint 42.

La figure 5 représente un montage inverse par rapport à ceux représentés sur les figures 3 et 4, en ce sens que le double joint torique 42, 43, 45, 47, similaire à celui de la figure 3, est porté par le papillon 12 du robinet, tandis que la portée d'étanchéité associée à ce double joint consiste en un siège conoïde 52 réalisé à l'intérieur du corps 1 du robinet.

Le papillon 12 comprend donc un niveau de sa tranche, une cavité annulaire 53 de forme similaire à celle représentée sur la figure 3 qui renferme le double joint 42, 43, 45, 47 de la façon précédemment indiquée.

Bien entendu, l'invention ne se limite pas aux garnitures d'étanchéité précédemment décrites. Celles-ci pourraient tout aussi bien consister en d'autres types de joints, par exemple des joints à talons en élastomère, en plastomère ou en matériaux composites.

## Revendications

1. Robinet à papillon de type visitable comprenant:
- un corps tubulaire (1) dont la partie centrale (6) délimite une chambre d'obturation (7) communiquant à l'extérieur par un orifice latéral (15) forment trappe de visite;
- un précorps annulaire (8) muni de deux perçages sensiblement radiaux (9, 10) diamétralement opposés, et pouvant passer par ledit orifice (15) pour venir s'engager dans ladite chambre (7) avec l'axe desdits perçages (9, 10) passant par ledit orifice (15);
- des moyens permettant une fixation démontable dudit précorps (8) dans ledit corps (1);
- un papillon (12) monté rotatif dans ledit précorps (8) au moyen d'un arbre (11) passant dans lesdits perçages;
- des moyens d'étanchéité aptes à coopérer avec ledit corps (1) et/ou ledit précorps (8) et avec ledit papillon (12) en vue d'assurer l'étanchéité amont/aval du robinet; et
- un chapeau (28) apte à venir se monter sur ledit corps (1) de manière à obturer, de façon étanche et démontable, ledit orifice (15), ce chapeau (28) comprenant un passage dans lequel est monté rotatif un arbre (29) d'entraînement en rotation du papillon (12), caractérisé en ce que ledit corps (1) omprend une face radiale interne annulaire (17), en ce que les susdits moyens de fixation comprennent une pluralité d'éléments de serrage axial (22) d'un premier flanc radial (20) dudit précorps (8) contre ladite face radiale (17) et en ce que tous les éléments de serrage (22) sont entièrement logés à l'intérieur du corps (1) et sont accessibles par le susdit orifice latéral (15) grâce à une conformation appropriée de ladite chambre d'obturation (7).

2. Robinet selon la revendication 1, caractérisé en ce que lesdits moyens de serrage comprennent des boulons venant se visser dans des perçages taraudés réalisés sur le flanc radial (21) du précorps (8) opposé au premier flanc radial et dont les têtes viennent comprimer au cours d'un dévissage des éléments élastiques (23) retenus par des protubérances (24) venant en saillie sur la paroi intérieure du corps.

3. Robinet selon la revendication 1, caractérisé en ce que les susdits moyens de serrage comprennent des coins engagés à force entre le susdit précorps et des protubérances venant en saillie sur la paroi intérieure du corps.

4. Robinet à papillon selon la revendication 1, caractérisé en ce que l'arbre (11) servant au montage rotatif du papillon (12) dans le précorps (8) et l'arbre (29) d'entraînement en rotation du papillon (12) qui traverse le chapeau (28) sont réalisés en une seule et même pièce.

5. Robinet à papillon selon la revendication 1, caractérisé en ce que l'arbre (11) servant au montage rotatif du papillon (12) dans le précorps (8) et l'arbre (29) d'entraînement en rotation du papillon (12) sont distincts l'un de l'autre et sont accouplés l'un à l'autre au moyen d'une liaison mécanique (34, 35).

6. Robinet à papillon selon la revendication 5, caractérisé en ce que la susdite liaison mécanique (34, 35) présente un léger jeu, de manière à transmettre le couple de manoeuvre et à filtrer les efforts parasites dus à des désalignements ou à des déformations en service.

7. Robinets à papillon selon l'une des revendications précédentes, caractérisé en ce que le susdit orifice latéral (15) est en outre partiellement refermé par une platine (26) munie de tenons (27) qui viennent s'engager dans une gorge (28) du corps (1) de manière à assurer la continuité mécanique du corps.

8. Robinet selon l'une des revendications précédentes, caractérisé en ce que les susdits moyens d'étanchéité comprennent une garniture d'étanchéité montée dans une gorge annulaire radiale (37) formée entre le flanc radial (20) du précorps (8) et la face radiale interne (17) de la zone de liaison (16)

9. Robinet selon la revendication 8, caractérisé en ce que la susdite garniture d'étanchéité consiste en un double joint torique métallique flexible comprenant :
- une première structure de joint torique (42) destinée à assurer une étanchéité statique avec le corps (1) du robinet ;
- une deuxième structure de joint torique (43), de diamètre inférieur à celui de la première structure et destinée à coopérer avec la tranche (44) du papillon (12) pour obtenir une étanchéité dite dynamique avec celui-ci ;
- une membrane (45) assurant une continuité de l'étanchéité entre les deux structures de joint (42, 43) ; et
- un anneau de réaction (47) monté serré contre la deuxième structure de joint (43), dans l'espace compris entre les deux structures (42, 43).

10. Robinet selon la revendication 9, caractérisé en ce que la susdite première structure de joint (42) est axialement comprimée entre la face radiale (17) du corps (1) et l'étagement (40) du flanc radial (20) du précorps (8).

11. Robinet selon la revendication 9, caractérisé en ce que la susdite première structure de joint (42) se trouve radialement comprimée entre le fond (50) de la gorge (49) et un second anneau de réaction (51) disposé dans le volume compris entre le susdit premier anneau de réaction (47) et ladite première structure de joint (42).

12. Robinet selon l'une des revendications 1 à 7, caractérisé en ce que les susdits moyens d'étanchéité comprennent une garniture d'étanchéité montée dans une gorge annulaire (53) radiale formée dans la tranche du papillon (12) et le susdit corps comprend un siège conoïde (52) sur lequel vient porter ladite garniture en position fermée du robinet.

13. Robinet selon la revendication 12, caractérisé en ce que la susdite garniture consiste en un double joint torique métallique flexible (42, 43, 45, 47).

## Patentansprüche

1. Zugängliches Schmetterlingsventil mit:
– einem rohrförmigen Körper (1), dessen Mittelteil (6) eine Verschlusskammer (7) begrenzt, die durch eine eine Zugangsfalle bildende seitliche Öffnung (15) mit der Umgebung verbunden ist,
– einem ringförmigen Vorkörper (8) mit zwei, im wesentlichen radialen, einander diametral entgegengesetzt liegenden Bohrungen (9, 10), der durch die Öffnung (15) dringen kann, um sich in die Kammer (7) einzufügen, wobei die Achse der Bohrungen (9, 10) durch die Öffnung (15) verläuft,
– Mitteln, die eine lösbare Befestigung des Vorkörpers (8) im Körper (1) ermöglichen,
– einem Schmetterling (12), der mittels einer durch die genannten Bohrungen verlaufenden Welle (11) drehbar im Vorkörper (8) angeordnet ist,
– Dichtmitteln, die mit dem Körper (1) und/oder dem Vorkörper (8) und dem Schmetterling (12) zusammenwirken können, um die Dichtheit vor und hinter dem Ventil zu bewirken, und
– einem Deckel (28), der auf dem Körper (1) aufgebracht werden kann, um in dichter und lösbarer Weise die Öffnung (15) zu verschliessen, wobei dieser Deckel (28) einen Durchgang aufweist, in dem eine Welle (29) zum Rotationsantrieb des Schmetterlings (12) drehbar angeordnet ist, dadurch gekennzeichnet, dass der Körper (1) eine radiale ringförmige innere Fläche (17) aufweist, und dass die Befestigungsmittel eine Vielzahl von Elementen (22) zum axialen Anpressen einer ersten radialen Flanke (20) des Vorkörpers (8) gegen die radiale Fläche (17) aufweisen, und dass alle Presselemente (22) gänzlich im Inneren des Körpers (1) untergebracht sind und durch besagte Seitenöffnung (15) zugänglich sind, dank einer angemessenen Gestaltung der besagten Verschlusskammer (7).

2. Ventil nach Anspruch 1, dadurch gekennzeichnet, dass die Anpressmittel Bolzen aufweisen, die sich in Gewindebohrungen auf der radialen Flanke (21) des Vorkörpers (8) entgegengesetzt der ersten radialen Flanke einschrauben und deren Köpfe während eines Aufschraubens elastische Elemente (23) komprimieren, die von Vorsprüngen (24) zurückgehalten werden, welche auf der Innenwand des Körpers vorspringen.

3. Ventil nach Anspruch 1, dadurch gekennzeichnet, dass die Anpressmittel Keile aufweisen, die mit Gewalt zwischen den Vorkörper und Vorsprünge eingekeilt sind, welche auf der Innenwand des Körpers vorspringen.

4. Schmetterlingsventil nach Anspruch 1, dadurch gekennzeichnet, dass die Welle (11) zum drehbaren Einbau des Schmetterlings (12) in den Vorkörper (8) und die Welle (29) zum Rotationsantrieb des Schmetterlings (12), die den Deckel (28) durchquert, aus ein- und demselben Stück bestehen.

5. Schmetterlingsventil nach Anspruch 1, dadurch gekennzeichnet, dass die Welle (11) zum drehbaren Einbau des Schmetterlings (12) in den Vorkörper (8) und die Welle (29) zum Rotationsantrieb des Schmetterlings (12) nicht aus dem gleichen Stück bestehen und miteinander mittels einer mechanischen Verbindung (34, 35) gekoppelt sind.

6. Schmetterlingsventil nach Anspruch 5, dadurch gekennzeichnet, dass die mechanische Verbindung (34, 35) ein leichtes Spiel aufweist, um das Steuerdrehmoment zu übertragen und die aufgrund von Nichtfluchten oder Verformungen im Betrieb auftretenden parasitären Kräfte zu dämpfen.

7. Schmetterlingsvertil nach einem der vorhergehenden Ansprüche, dadurch gekennzeichnet, dass die Seitenöffnung (15) ausserdem teilweise durch eine Platine (26) verschlossen wird, die mit Zapfen (27) versehen ist, welche sich in eine Kehle (28) des Körpers (1) einfügen, um die mechanische Kontinuität des Körpers zu bewirken.

8. Ventil nach einem der vorhergehenden Ansprüche, dadurch gekennzeichnet, dass die Dichtmittel eine Dichtgarnitur aufweisen, welche in einer radialen ringförmigen Kehle (37) angeordnet ist, die zwischen der radialen Flanke (20) des Vorkörpers (8) und der radialen Innenfläche (17) des Verbindungsbereichs (16) ausgebildet ist.

9. Ventil nach Anspruch 8, dadurch gekennzeichnet, dass die Dichtgarnitur aus einer beweglichen metallischen Doppeltorusdichtung besteht, die aufweist:
- eine erste Struktur einer Torusdichtung (42), die dazu bestimmt ist, eine statische Dichtheit mit dem Körper (1) des Ventils herzustellen,
- eine zweite Struktur einer Torusdichtung (43) mit einem geringeren Durchmesser als die erste Struktur und dazu bestimmt, mit der Kante (44) des Schmetterlings (12) zusammenzuwirken, um eine sogenannte dynamische Dichtheit mit letzterem zu erhalten,
- eine Membran (45), die eine Dichtheitskontinuität zwischen den beiden Dichtungsstrukturen (42, 43) bewirkt und
- einen Reaktionsring (47), der gegen die zweite Dichtungsstruktur (43) angepresst in dem Bereich zwischen den beiden Strukturen (42, 43) angeordnet ist.

10. Ventil nach Anspruch 9, dadurch gekennzeichnet, dass die erste Dichtungsstruktur (42) axial zwischen der radialen Fläche (17) des Körpers (1) und der Abstufung (40) der radialen Flanke (20) des Vorkörpers (8) komprimiert ist.

11. Ventil nach Anspruch 9, dadurch gekennzeichnet, dass die erste Dichtungsstruktur (42) radial zwischen dem Boden (50) der Kehle (49) und einem zweiten Reaktionsring (51) komprimiert ist, der in dem Raum zwischen dem ersten Reaktionsring (47) und der ersten Dichtungsstruktur (42) angeordnet ist.

12. Ventil nach einem der Ansprüche 1 bis 7, dadurch gekennzeichnet, dass die Dichtmittel eine Dichtungsgarnitur aufweisen, die in einer in der Kante des Schmetterlings (12) gebildeten ringförmigen radialen Kehle (53) angeordnet ist, und dass der Körper einen kegelförmigen Sitz (52) aufweist, auf dem die Garnitur in geschlossener Stellung des Ventils aufliegt.

13. Ventil nach Anspruch 12, dadurch gekennzeichnet, dass die Garnitur aus einer beweglichen metallischen Doppeltorusdichtung (42, 43, 45, 47) besteht.

**Claims**

1. A butterfly valve of inspectable type, comprising:
- a tubular body (1) whose central part (6) defines a closure chamber (7) communicating with the outside through a lateral orifice (15) forming an inspection trap;
- an annular prebody (8) with two diametrically opposite substantially radial bores (9, 10) and able to pass through said orifice (15) for engaging in said chamber (7) with the axis of said bores (9, 10) passing through said orifice (15);
- means for removably fixing said prebody (8) in said body (1);
- a butterfly (12) mounted for rotation in said prebody (8) by means of a shaft (11) passing through said bores;
- sealing means adapted for cooperating with said body (1) and/or with said prebody (8) and with said butterfly (12), so as to provide the upstream/downstream sealing of the valve; and
- a cap (28) mountable on said body (1) for sealingly and removably closing said orifice (15), this cap (28) including a passage in which is rotatably mounted a shaft (29) for rotating the butterfly (12), characterized in that said body (1) includes an annular internal radial face (17), in that said fixing means include a plurality of elements (22) for axially clamping a first radial side (20) of said prebody (8) against said radial face (17), and in that all the clamping elements (22) are entirely housed inside the body (1) and are accessible through said lateral orifice (15) due to an appropriate shape of said closure chamber (7).

2. The valve according to claim 1, characterized in that said clamping means include bolts screwable into tapped bores formed in the radial side (21) of the prebody (8) opposite the first radial side and whose heads compress, during unscrewing, resilient elements (23) retained by protuberances (24) projecting from the inner wall of the body.

3. The valve according to claim 1, characterized in that said clamping means include wedges force fitted between said prebody and protuberances projecting from the inner wall of the body.

4. The butterfly valve according to claim 1, characterized in that the shaft (11) for rotatably mounting the butterfly (12) in the prebody (8) and the shaft (29) for rotating the butterfly (12) which passes through the cap (28) are formed as one and the same piece.

5. The butterfly valve according to claim 1, characterized in that the shaft (11) for rotatably mounting the butterfly (12) in the prebody (8) and the shaft (29) for rotating the butterfly (12) are separate from each other and are coupled to one another by means of a mechanical connection (34, 35).

6. The butterfly valve according to claim 5, characterized in that said mechanical connection (34, 35) has a slight play so as to transmit the operating torque and to filter the parasite forces due to misalignments or deformations in use.

7. The valve according to one of the preceding claims, characterized in that said lateral orifice (15) is further partially closed by a plate (26) provided with tenons (27) which engage in a groove (28) of the body (1) so as to provide the mechanical continuity of the body.

8. The valve according to one of the preceding claims, characterized in that said sealing means include a sealing packing mounted in a radial annular groove (37) formed between the radial side (20) of the prebody (8) and the internal radial face (17) of the connecting zone (16).

9. The valve according to claim 8, characterized in that said sealing packing consists of a double flexible metal O seal including:
- a first O seal structure (42) providing static sealing with the body (1) of the valve;
- a second O seal structure (43) of a diameter less than that of the first structure and intended to cooperate with the edge (44) of the butterfly (12) so as to obtain so called dynamic sealing therewith;
- a membrane (45) providing a continuity of sealing between the two seal structures (42, 43); and
- a reaction ring (47) mounted in tight relation against the second seal structure (43) in the space between the two structures (42, 43).

10. The valve according to claim 9, characterized in that said first seal structure (42) is compressed axially between the radial face (17) of the body (1) and the step (40) of the radial side (20) of the prebody (8).

11. The valve according to claim 9, characterized in that said first seal structure (42) is compressed radially between the bottom (50) of the groove (49) and a second reaction ring (51) disposed in the volume between said first reaction ring (47) and said first seal structure (42).

12. The valve according to one of claims 1 to 7, characterized in that said sealing means include a sealing packing mounted in a radial annular groove (53) formed in the edge of the butterfly (12) and said body includes a conoid seat (52) on which said packing comes to bear in the closed position of the valve.

13. The valve according to claim 12, characterized in that said packing consists of a double flexible metal O seal (42, 43, 45, 47).

EP 0 270 451 B1

<u>FIG.1</u>

FIG. 2

FIG. 3

FIG. 4

FIG. 5